# EUROPÄISCHE PATENTSCHRIFT

(11) **EP 1 523 861 B1**
(45) Veröffentlichungstag und Bekanntmachung des Hinweises auf die Patenterteilung: **06.09.2006**
(21) Anmeldenummer: 03787727.1
(22) Anmeldetag: 23.07.2003
(51) Int. Cl.: H04Q 7/38

(54) **VERFAHREN, FUNKKOMMUNIKATIONSGERÄT UND NETZWERKKONTROLLEINHEIT ZUR ÜBERTRAGUNG EINER GRUPPENNACHRICHT**
METHOD, RADIO COMMUNICATIONS DEVICE AND NETWORK CONTROLLER UNIT FOR TRANSMITTING A GROUP MESSAGE
PROCEDE, APPAREIL DE RADIOCOMMUNICATION ET UNITE DE COMMANDE RESEAU DESTINES A LA TRANSMISSION D'UN MESSAGE DE GROUPE

(30) Priorität: 23.07.2002 DE 10233438
(43) Veröffentlichungstag der Anmeldung: 20.04.2005
(73) Patentinhaber: SIEMENS AKTIENGESELLSCHAFT, 80333 München (DE)
(72) Erfinder: SCHWAGMANN, Norbert, 38102 Braunschweig (DE); BECKMANN, Mark, 38124 Braunschweig (DE); GOTTSCHALK, Thomas, 12524 Berlin (DE)
(86) Internationale Anmeldenummer: PCT/DE2003/002481
(87) Internationale Veröffentlichungsnummer: WO 2004/017661

(56) Entgegenhaltungen:
- EP-A- 1 006 740
- DE-A- 19 856 834
- "UNIVERSAL MOBILE TELECOMMUNICATIONS SYSTEM (UMTS);Services provided by the Physical Layer (3GPP TS 25.302 version 3.6.0 Release 99)" , ETSI TS 125 302 V3.6.0, XX, XX, PAGE(S) 1-57 XP002199032 Seite 9 -Seite 15, Kapitel 5 und 6

## Beschreibung

Die Erfindung betrifft Verfahren zur Übertragung einer Gruppennachricht gemäß dem Oberbegriff des Anspruchs 1, Funkkommunikationsgerät gemäß dem Oberbegriff des Anspruchs 7 und Netzwerkkontrolleinheit gemäß dem Oberbegriff des Anspruchs 8.

Bei vielen in modernen Mobilfunksystemen angebotenen Diensten und Anwendungen sollen Nachrichten nicht nur zu einem, sondern zu zwei und mehreren Mobilfunkteilnehmern übertragen werden. Beispiele für solche Dienste und Anwendungen sind News-Groups, Video-Konferenzen, Video-On-Demand, verteilte Anwendungen usw.. Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über N (N=Anzahl der Empfänger der Nachricht) Einzelverbindungen (Unicast-Verbindungen) übertragen wird und dabei mehrfach über gemeinsame Verbindungswege gesendet wird, benötigt dieses Verfahren eine sehr hohe Bandbreite.

Eine bessere Möglichkeit bietet hier die Multicast-Übertragung. Hierbei werden die verschiedenen Teilnehmer, denen dieselbe Nachricht übermittelt werden soll, zu einer Gruppe (Multicast-Gruppe) zusammengefasst, der eine Adresse (Multicast-Adresse) zugeordnet wird (Point-to-Multipoint-Übertragung). Die zu übertragenden Daten werden daraufhin nur einmal an diese Multicast-Adresse gesendet. Über gemeinsame Verbindungswege vom Sender zu den Empfängern wird die Multicast-Nachricht im Idealfall nur einmal gesendet. Der Sender muss nicht notwendigerweise wissen, wo und wie viele Empfänger sich hinter der Multicast Adresse verbergen.

Bei der Übertragung von Daten, egal welcher Art, wird im Mobilfunk zwischen zwei Übertragungsrichtungen unterschieden. Allgemein wird die Daten-Übertragung von der i.A. ortsfesten Basisstation zu den Mobilfunkstationen als Übertragung in Downlink-Richtung bezeichnet, bei der Datenübertragung in der Gegenrichtung von einer Mobilfunkstation zu der Basisstation spricht man von Übertragung in Uplink-Richtung.

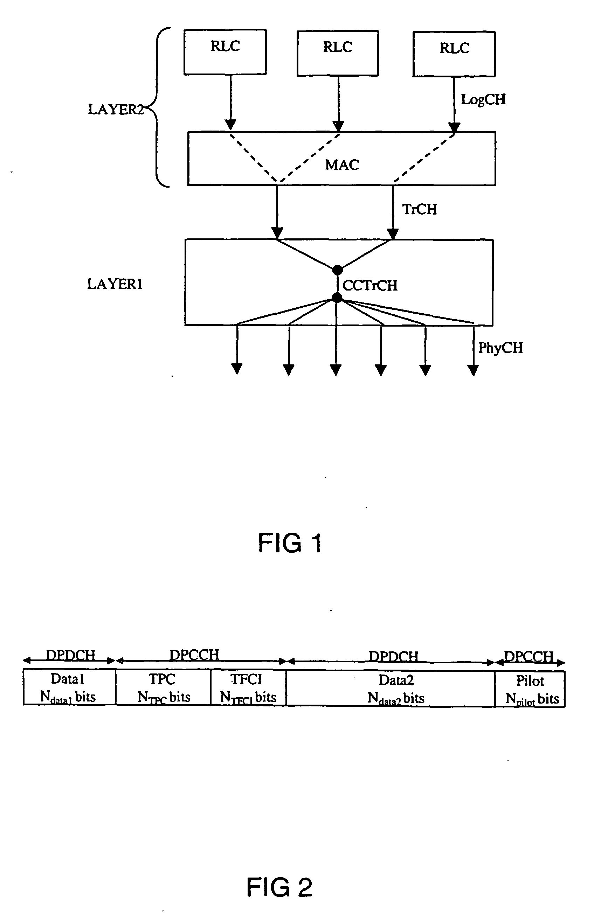

Zum leichteren Verständnis der Problematik wird anhand der Figur 1 im Folgenden beispielhaft auf einzelne Komponenten Architektur eines UMTS-Mobilfunknetzes eingegangen, insbesondere auf die hieraus bekannten unterschiedlichen Arten von Kanälen, die als Schnittstelle zwischen verschiedenen gemäß OSI-Referenzmodell vorgesehen Schichten (Layer) des sog. Protokollstapels genutzt werden.

In Figur 1 sind die Schnittstellen zwischen einer gemäß OSI-Referenzmodell vorgesehenen Verbindungsschicht (Data Link Layer) LAYER2, die sich in ein Protokoll für eine Medienzugriffskontrolle (Medium Access Control) MAC sowie ein Protokoll zur Unterstützung einer Segmentierung und Rücktransport für Nutz- und Signalisierungsdaten (Radio Link Control) RLC eingeteilt, und der Bitübertragungsschicht (Physikalische Schicht, Physical Layer) LAYER1 dargestellt.

Zunächst sei die Vorgehensweise auf der Netzwerkseite für eine bestimmte aktive Mobilfunkstation in einer Mobilfunkzelle erläutert.

Daten von verschiedenen Quellen werden auf verschiedenen Logischen Kanälen LogCH dem Medium Access Controller MAC zugeführt. Im MAC wird dann jeder Logische Kanal LoGCH auf genau einen Transport Kanal TrCH abgebildet. Dabei ist es auch möglich, dass mehr als ein Logischer Kanal LogCH auf ein und den selben Transportkanal TrCH abgebildet wird. Aus der Darstellung in der Figur 1 ist dies ebenfalls ableitbar, da dort den dargestellten drei Logischen Kanälen LogCH lediglich zwei Transportkanäle TrCH gegenüberstehen

Im Allgemeinen erfolgt das Abbilden der Logischen Kanäle LogCH auf die Transportkanäle TrCH durch Multiplexen der Logischen Kanäle, d.h. die Daten von mehreren Logischen Kanälen LogCH werden zu einem Transportkanal TrCH zusammengefasst. Dieses Multiplexen kann jedoch nicht beliebig erfolgen, da Logische Kanäle LogCH, die auf den gleichen Transportkanal TrCH abgebildet werden, im wesentlichen gleiche Anforderungen an die Übertragungsqualität, die durch die sogenannte Dienstgüte ("Quality of Service", QoS) angegeben ist. Dazu gehören beispielsweise maximale Bit- bzw. Blockfehlerraten (BER bzw. BLER) sowie maximale Verzögerungszeiten.

In der Bitübertragungsschicht LAYER1 werden je Transportkanal TrCH entsprechend der Dienstgüteanforderung Schritte durchgeführt, wie beispielsweise ein Anhängen von sog. CRC-Blöcken, mit denen auf der Empfängerseite fehlerhafte Nachrichten erkannt werden, und die Kanalkodierung, bei der systematisch Redundanz zu den Daten hinzugefügt wird, um eventuell durch die Funkübertragung auftretende Fehler korrigieren zu können.

Im Anschluss an die Durchführung dieser Schritte für jeden Transportkanal TrCH, werden innerhalb der Bitübertragungsschicht LAYER1 bestimmte Transportkanäle TrCH zu einem Coded Composite Transport Channel (CCTrCH) durch Multiplexen zusammengeführt.

Dieser Coded Composite Transport Channel CCTrCH wird dann wiederum auf einen oder mehrere physikalische Kanäle PhyCH abgebildet und über eine gemäß UMTS definierte Luftschnittstelle übertragen.

Die beschriebene Vorgehensweise wird in jedem Zeitintervall ("Transmission Time Intervall", TTI) durchgeführt und hat als eindeutiges Resultat den CCTrCH und die physikalischen Kanäle, über die die Daten übertragen werden. Dabei werden bei dedizierten Daten, d.h. Daten, die nur für eine bestimmte Mobilfunkstation gedacht sind, nur Logische Kanäle LogCH und Transportkanäle TrCH multiplext, die genau dieser einen Mobilfunkstation zugeordnet sind.

Für ein besseres Verständnis des im Folgenden Dargelegten, wird an dieser Stelle auf Einzelheiten im Bezug auf Physikalische Kanäle PhyCH eingegangen.

In UMTS gibt es für die Übertragung von Informationen zwei Arten von Funkkanälen: Dedizierte Kanäle (Dedicated Channels) und gemeinsame Kanäle (Common Channels). Bei den dedizierten Kanälen wird eine physikalische Ressource nur für die Übertragung von Daten für ein bestimmtes Teilnehmergerät (User Equipment) reserviert. Bei den gemeinsamen Kanälen können Daten übertragen werden, die für alle Teilnehmer gedacht sind (z.B. der Primary Common Control Physical Channel P-CCPCH) oder nur für einen bestimmten Teilnehmer. Im letzteren Fall muss auf dem gemeinsamen Kanal oder auf einem anderen assoziierten physikalischen Kanal die Information übertragen werden, für welchen Teilnehmer die Daten gedacht sind (z.B. eine Mobilfunkstations-ID).

Ein Common Channel ist z.B. der sogenannte "Downlink Shared Channel" (DSCH), der im FDD-Mode des UMTS-Standards als Transportkanal TrCH genutzt wird, wobei einer Mobilfunkstation generell entweder keiner, nur einer oder mehrere Transportkanäle vom Typ DSCH zugeordnet werden kann.

Ist einer Mobilfunkstation mindestens ein DSCH zugeordnet, so werden alle DSCHs (angehängtes "s" wird hier und im Folgenden zur Pluralbildung verwendet) dieser Mobilfunkstation exklusiv zu einem CCTrCH verarbeitet. Da DSCHs für unregelmäßig aufkommende Daten verwendet werden, kann analog auch die Anzahl verwendeter Physikalischer Kanäle PhyCH von TTI zu TTI variieren. Daher müssen für jedes TTI zuvor die verwendeten Physikalischen Kanäle PhyCH bekannt gegeben werden. Dies erfolgt für jede Mobilfunkstation auf einem bestimmten dedizierten Physikalischen Kanal, dem sogenannten "Dedicated Physical Control Channel" (DPCCH), dessen Burststruktur in Figur 2 dargestellt ist.

Ein DPCCH-Burst weist neben einem Sendeleistungskontroll-("Transmission Power Control", TPC-) Feld ein Informations-("Transport Format Combination Indicator", TFCI-) Feld auf, das unter anderem die Information über die genutzten physikalischen Kanäle beinhaltet. Über diese Information hinaus ist diesem TFCI eine sogenannte "Transport Format Combination" (TFC) zugeordnet. Diese gibt an, wie groß die Datenblöcke der unterschiedlichen Transportkanäle TrCH innerhalb des betroffenen physikalischen Kanals PhyCH sind. Diese Information ist auf der Empfängerseite notwendig, um das Multiplexen verschiedener Transportkanäle wieder rückgängig machen zu können. Die Zuordnung der TFCIs zu den genutzten Physikalischen Kanälen PhyCH bzw. deren Transport Format Combination (TFC) ist z.B. durch eine Tabelle festgelegt. Die Festlegung findet auf der Seite des UMTS Funknetzwerks ("UMTS Terrestrial Radio Access Network", UTRAN) statt und wird durch Signalisierung der Mobilfunkstation mitgeteilt.

Zu jedem CCTrCH für DSCHs muss das Netzwerk demnach folgende Informationen vorhalten:
- die Zuordnung von CCTrCH zu Mobilfunkstation,
- die Zuordnung aller möglichen TFCIs zu den entsprechenden Physikalischen Kanälen PhyCH und einer Transport Format Combination (TFC),
- den physikalischen Kanal PhyCH, auf dem der zugehörige DPCCH mit dem TFCI-Feld gesendet wird.

Des weiteren muss das Netzwerk zu jedem TTI auswählen, welcher TFCI (d.h. welche Physikalischen Kanäle PhyCH und welcher TFC) für den CCTrCH benutzt wird, und diese Auswahl muss auf dem zugehörigen DPCCH bekannt gegeben werden.

Aus EP 1 006 740 A2 ist ein Verfahren zur Durchführung eines Multicast Service in einem mobilen Kommunikationssystem bekannt. Dabei werden sogenannte "Multicast Service Identifier" zu jeder einzelnen Mobilstation eines Multicast Servers zugeordnet. Weiter werden sogenannte "Control and Data Frame A-reas" in Übereinstimmung zu verschiedenen Multicast-Diensten mit Hilfe eines sogenannten "Common Downlink" übertragen.

Aus DE 198 56 834 A1 ist ein Verfahren zur Datenübertragung in einem Funkkommunikationssystem bekannt. Dabei werden Signalisierungen von verwendeten gemeinsamen Kanälen impliziert über eine Datenrate durchgeführt. Bei bestimmten Datenraten der einzelnen Dienste werden mehrere Kombinationen von Kanälen (Spreizcodes) alternativ zugelassen.

Aus ETSI TS 125 302, V3.6.0, (2000-09) "Universal Mobile Telecommunications System (UMTS); Services provided by the Physical Layer (3GPP TS 25.302 version 3.6.0 Release 1999)" sind technische Spezifikationen von zur Verfügung gestellten Diensten des Physical Layers bei UTRA bekannt.

Die Aufgabe der Erfindung ist es in einem, insbesondere einem nach dem UMTS-Standard funktionierenden, Funkkommunikationssystem der dritten Generation die Übertragung von Gruppennachrichten zu ermöglichen.

Diese Aufgabe wird ausgehend von den Merkmalen des Oberbegriffs des Verfahrensanspruchs 1 durch dessen kennzeichnende Merkmale, ausgehend von dem Funkkommunikationsgerät gemäß dem Oberbegriff des Anspruchs 8 durch dessen kennzeichnende Merkmale sowie ausgehend von der Netzwerkkontrolleinheit gemäß dem Oberbegriff des Anspruchs 9 durch dessen kennzeichnenden Merkmale gelöst.

Bei dem erfindungsgemäßen Verfahren zur Übertragung von mindestens einer Gruppennachricht an mindestens eine Gruppe von ein oder mehreren Funkkommunikationsgeräten in mindestens einem durch eine Netzwerkkontrolleinheit, insbesondere Basisstation, bereitgestellten Funkversorgungsbereich eines, insbesondere nach dem UMTS-Standard funktionierenden, Funkkommunikationsnetzwerks unter Nutzung mindestens eines, während mindestens eines Zeitintervalls, von mindestens einem Transportkanal übertragenen zu einem, insbesondere als CCTrCH ausgestalteten, Multiplexkanal verknüpften Satz von Daten, erfolgt durch die Netzwerkkontrolleinheit eine Zuordnung von Funkkommunikationsgeräten zu den Gruppen. Zudem wird dem Funkversorgungsbereich durch die Netzwerkkontrolleinheit eine erste Zuordnungsinformation bereitgestellt, wobei die erste Zuordnungsinformation eine Zuordnung zwischen dem Multiplexkanal und allen Funkkommunikationsgeräten zumindest einer Gruppe beinhaltet. Des Weiteren erfolgt eine Zuordnung eines Indikators je Funkkommunikationsgerät, wobei ein Indikator zumindest eine erlaubte Verknüpfung des Satzes von Daten und die physikalischen Kanäle PhyCH, auf denen die Daten übertragen werden, angibt.

Die Funkkommunikationseinrichtung nach Anspruch 8 weist zur Lösung dieser Aufgabe erfindungsgemäß Mittel zur Durchführung des Verfahrens auf.

Diese Aufgabe wird ebenso vorteilhaft durch die Netzwerkkontrolleinheit gelöst, die erfindungsgemäß Mittel zur Durchführung des Verfahrens aufweist.

Als ein erfindungsgemäßer Kern ist daher auch eine Vorrichtung auf Netzwerkseite, insbesondere Basisstation, beschrieben, die die Aufgabe erledigen kann.

Die Basisstation wird gemäß dieser Erfindung um folgende Funktionalitäten erweitert:
- Zuordnung von Mobilfunkstationen zu Multicast Gruppen und zum CCTrCH, auf dem die Multicast Gruppen abgebildet werden.
- Auswahl eines TFCs für den CCTrCH und Zuordnung jeweils eines zugehörigen TFCIs pro Mobilfunkstation sowie des DPCCHs zur Übertragung des TFCIs, abhängig davon, welche Multicast Gruppen übertragen werden sollen.
- Dynamische Zuordnung von Mobilfunkstationen zu einem CCTrCH, abhängig davon, welcher TFC ausgewählt wurde, und somit abhängig davon, ob welche Multicast Gruppen in einem TTI über den CCTrCH übertragen werden sollen.
- Übertragung des entsprechenden TFCI pro Mobilfunkstation auf dem jeweils zugehörigen DPCCH.

Anstelle eines DPCCHs kann auch ein gemeinsamer Physikalischer Kanal (common channel), insbesondere einem aus der deutschen Veröffentlichung DE 101 54 428 A1 bekannten "Multicast Power Channel" McPCH, zur Übertragung des TFCIs genutzt werden.

Ein Vorteil der Erfindung ist, dass dadurch ermöglicht wird, die existierenden Kanalstrukturen im UTRAN-Protokoll für die Multicast-Nachrichtenübertragung zu erweitern. Ein weiterer Vorteil liegt darin, dass die Funktionalität der Mobilfunkstation gar nicht oder nur sehr geringfügig geändert werden muss.

Zur Übertragung von Nachrichten zu einer Multicast Gruppe könnten Transportkanäle TrCH vom Typ "Physical Downlink Shared Channel" (PDSCH) genutzt werden. Ein oder mehrere Multicast Gruppen könnten auf einen bestimmten DSCH abgebildet werden. Mobilfunkstationen, die zu mindestens einer dieser (ein oder mehreren) Multicast Gruppe(n) gehören, müssen dann den entsprechenden Transportkanal TrCH empfangen. Der CCTrCH, in den dieser Transportkanal TrCH mündet, ist dann allen Mobilfunkstationen aus dieser (ein oder mehreren) Multicast Gruppe(n) zugeordnet.

Es ist auch denkbar, dass zur Sendung der Multicast-Nachrichten auch andere, neue Transportkanäle TrCH genutzt werden. Ebenfalls wäre es denkbar, dass der schon erwähnte TFCI nur Information zur Transport Format Combination TFC enthält. Die Information, welche Physikalischen Kanäle PhyCH genutzt werden, könnte durch eine anderweitige Signalisierung erfolgen, u.a. auch auf eine langfristigere Art (d.h. nicht von Rahmen zu Rahmen in LAYER1, sondern durch Signalisierung in höheren Protokollschichten wie z.B. LAYER2 oder LAYER3) signalisiert werden.

Weitere Vorteile der Erfindung werden anhand von Ausführungsbeispielen ausgehend von den Darstellungen in den Figuren 1 und 2 beschrieben. Davon zeigt
- Figur 1:: UMTS Architektur der unteren Schichten des OSI-Schichtenmodells,
- Figur 2:: Aufbau eines Bursts dedizierter Kanäle.

Es soll bei einem ersten Beispiel nur ein Logischer Kanal (der genau einer Multicast Gruppe entspricht) auf einen Transportkanal des Typs DSCH und dieser Transportkanal exklusiv auf einen CCTrCH abgebildet werden. Demnach ist dieser CCTrCH allen Mobilfunkstationen zuzuordnen, die in dieser einen Multicast Gruppe eingeschrieben sind. Dies sollen in diesem Beispiel drei Mobilfunkstationen MS1, MS2 und MS3 sein. Demnach muss das Netzwerk zu diesem einen CCTrCH folgende beispielhafte Tabelle 1 vorhalten:

**Tabelle 1: Notwendige Informationen zu einem CCTrCH für Multicast Gruppen. Die Einträge in der Liste sind nur beispielhaft.**

| | MS1 | MS2 | MS3 |
|---|---|---|---|
| TFC#1 & c_{128,125} | TFCI#2 | TFCI#3 | TFCI#5 |
| TFC#2 & c_{256,200} | TFCI#6 | TFCI#1 | TFCI#3 |
| TFC#3 & c_{64,60} | TFCI#4 | TFCI#2 | TFCI#1 |
| Spreizungscode des DPCCH | c_{256,12} | c_{256,27} | c_{256,17} |

Die Liste wird erfindungsgemäß um eine Mobilfunkstation (d.h. um eine Spalte) erweitert werden, wenn für diese Mobilfunkstation gilt:
- sie ist in der gleichen Multicast Gruppe eingeschrieben und kommt von einer anderen Zelle in die momentan betrachtet Zelle, oder
- sie ist schon in der momentan betrachteten Zelle und schreibt sich neu in die betrachtete Multicast Gruppe ein.

Dagegen wird erfindungsgemäß eine Mobilfunkstation aus der Liste gestrichen, wenn gilt:
- sie verlässt die momentan betrachtete Zelle, oder
- sie schreibt sich aus der Multicast Gruppe aus.

Die Auswahl des TFC und des genutzten Code (z.B. TFC#1 & c_{128,125}) durch das Netzwerk kann unter Umständen zu jedem Zeitintervall (TTI), in dem Nachrichten für diese Multicast Gruppe gesendet wird, geändert werden. Um die Auswahl den MS zu signalisieren, wird jeder MS auf seinem DPCCH (letzte Zeile von Tabelle 1) der entsprechende, nach Tabelle 1 für diese MS gültige TFCI gesendet.

Bei einer im Folgenden erläuterten zweiten Ausführungsform seien beispielhaft in einer Zelle die Mobilfunkstationen MS1, MS2 und MS3. Des weiteren sollen drei Multicast Gruppen MC1, MC2 und MC3 angenommen werden, wobei die Mobilfunkstationen gemäß Tabelle 2 in den Multicastgruppen eingeschrieben sein sollen.

**Tabelle 2: Zugehörigkeit der Mobilfunkstationen zu Multicast Gruppen**

| | MC1 | MC2 | MC3 |
|---|---|---|---|
| MS1 | | X | |
| MS2 | | | X |
| MS3 | X | | X |

Zudem sei angenommen, dass die drei in Figur 1 gezeigten Logischen Kanäle LogCH diesen drei Multicast Gruppen entsprechen. Die Transportkanäle in Abbildung 1 sind dann wiederum vom Typ DSCH. Alle drei Multicast Gruppen münden demnach in ein und dem selben CCTrCH.

Auch hier muss erfindungsgemäß das Netzwerk zu diesem einen CCTrCH die beispielhafte Tabelle 1 vorhalten.

Auch in diesem Beispiel müsste die Liste erweitert bzw. gekürzt werden, wenn eine entsprechende Mobilfunkstation hinzukommt (neu in der Zelle oder neu in mindestens ein der drei Multicast Gruppen MC1, MC2, MC3) oder abgeht (Zellwechsel oder in keiner der drei Multicast Gruppen mehr eingeschrieben) analog zum ersten Ausführungsbeispiel. Ebenso können sich die TFCI-Werte von TTI zu TTI analog zum ersten Ausführungsbeispiel ändern.

Da nicht notwendigerweise in jedem TTI Nachrichten von allen drei Multicast Gruppen MC1, MC2, MC3 zu übertragen sind, werden auch nicht in jedem TTI alle Multicast Gruppen MC1, MC2, MC3 gemultiplext. Sind beispielsweise nur Nachrichten für die erste Multicast Gruppe MC1 in einem TTI zu senden, sind in diesem TTI auch nur die Mobilfunkstation MS3 zu informieren (vgl. Tabelle 2). Das heißt, dass in jedem TTI die Tabellen 1 und 2 kombiniert betrachtet werden müssen.

Werden beispielsweise in einem TTI Nachrichten von den Multicast Gruppen MC1 und MC2 gemultiplext und gesendet, dann müssen alle Mobilfunkstationen, die in MC1 oder/und MC2 eingeschrieben sind, entsprechend informiert werden. Nach Tabelle 2 wären es für diesen Falle MS1 und MS3.

Die im Folgenden beschriebene dritte Ausführungsform unterscheidet sich zu der zweiten Ausführungsform dadurch, dass die Mobilfunkgeräte MS1 und MS2 den TFCI nicht über einen eigenen - dedizierten - DPCCH empfangen, sondern über einen gemeinsamen Physikalischen Kanal (Common Channel), wie z.B. der McPWCH. Über einen solchen gemeinsamen Kanal wird auch nur ein TFCI gesendet, der dann für MS1 und MS2 der gleiche ist. Dann ändert sich die Tabelle 1 zur folgenden Tabelle 3.

**Tabelle 3: Notwendige Informationen zu einem CCTrCH für Multicast Gruppen, wobei MS1 und MS2 den TFCI über einen gemeinsamen Physikalischen Kanal (common channel) erhalten**

| | MS1 | MS2 | MS3 |
|---|---|---|---|
| TFC#1 & c_{128,125} | TFCI#1 | | TFCI#5 |
| TFC#2 & c_{256,200} | TFCI#5 | | TFCI#3 |
| TFC#3 & c_{64,60} | TFCI#4 | | TFCI#1 |
| Spreizungscode des DPCCH bzw. des gemeinsamen physikalischen Kanals | C_{256,14} | | c_{256,17} |

Bei einer vierten Ausführungsform wird im Gegensatz zu den bisher beschriebenen Ausführungsbeispielen nun kein Transportanal vom Typ DSCH genutzt, sondern ein beliebiger, gegebenenfalls neu zu definierender, Kanal. In diesem Fall wird im Allgemeinen der TFCI nur zur Signalisierung des TFC genutzt werden, so dass diese Ausführungsvariante ohne weiteres mit einer der drei vorangegangenen Ausführungsvarianten kombinierbar ist. Bei einer derartigen Kombination würde sich als einziger Unterschied ergeben, dass die Bedeutung des TFCI eine andere ist, d.h. der TFCI signalisiert nur den gewählten TFC, jedoch nicht die genutzten physikalischen Kanäle PhyCH.

## Patentansprüche

1. Verfahren zur Übertragung von mindestens einer Gruppennachricht an mindestens eine Gruppe (MC1, MC2, MC3) von ein oder mehreren Funkkommunikationsgeräten (MS1, MS2, MS3) in mindestens einem durch eine Netzwerkkontrolleinheit oder Basisstation bereitgestellten Funkversorgungsbereich eines nach dem UMTS-Standard funktionierenden Funkkommunikationsnetzwerks unter Nutzung mindestens eines während mindestens eines Zeitintervalls (TTI) von mindestens einem Transportkanal (TrCH) übertragenen zu einem als CCTrCH ausgestalten Multiplexkanal (CCTrCH) verknüpften Satz von Daten,
**dadurch gekennzeichnet, dass**
a) durch die Netzwerkkontrolleinheit eine Zuordnung von Funkkommunikationsgeräten (MS1, MS2, MS3) zu den Gruppen und zum CCTrCH erfolgt,
b) dem Funkversorgungsbereich durch die Netzwerkkontrolleinheit eine erste Zuordnungsinformation bereitgestellt wird, wobei die erste Zuordnungsinformation eine Zuordnung zwischen dem Multiplexkanal (CCTrCH) und den allen Funkkommunikationsgeräten (MS1, MS2, MS3, MS4) zumindest einer Gruppe beinhaltet,
c) eine Zuordnung eines Indikators je Funkkommunikationsgerät erfolgt, wobei ein Indikator zumindest eine erlaubte Verknüpfung des Satzes von Daten angibt.

2. Verfahren nach Anspruch 1, **dadurch gekennzeichnet, dass** die Bereitstellung der ersten Zuordnungsinformation adaptiv erfolgt.

3. Verfahren nach einem der vorherigen Ansprüche, **dadurch gekennzeichnet, dass** der Indikator den Multiplexkanal (CCTrCH) und/oder die physikalischen Kanäle spezifizierende Informationen enthält.

4. Verfahren nach einem der vorherigen Ansprüche, **dadurch gekennzeichnet, dass** als Transportkanal (TrCH) ein gemeinsamer Downlink Shared Channel "DSCH" Kanal verwendet wird.

5. Verfahren nach Anspruch 2, **dadurch gekennzeichnet, dass** der Indikator über einen dedizierten physikalischen "Dedicated Physical Control Channel" DPCH Kanal übertragen wird.

6. Verfahren nach Anspruch 2, **dadurch gekennzeichnet, dass** der Indikator über einen gemeinsamen physikalischen "Multicast Power Channel" McPCH Kanal übertragen wird.

7. Funkkommunikationsgerät mit Mitteln zur Durchführung des Verfahrens nach einem der vorhergehenden Ansprüche.

8. Netzwerkkontrolleinheit mit Mitteln zur Durchführung des Verfahrens nach einem der Ansprüche 1 bis 6.

## Claims

1. Method for transmitting at least one group message to at least one group (MC1, MC2, MC3) of one or more radio communication devices (MS1, MS2, MS3) in at least one radio coverage area, said area being provided by a network control unit or base station, of a radio communication network operating according to the UMTS standard, using at least one during at least one time interval (TTI) of at least one transport channel (TrCH) transmitted to a multiplex channel (CCTrCH) embodied as a CCTrCH, linked set of data,
**characterised in that**
a) radio communication devices (MS1, MS2, MS3) are assigned to the groups and to the CCTrCH by the network control unit,
b) a first item of assignment information is assigned to the radio coverage area by the network control unit, with said first item of assignment information containing an assignment between the multiplex channel (CCTrCH) and all the radio communication devices (MS1, MS2, MS3, MS4) of at least one group,
c) an indicator is assigned per radio communication device, with an indicator indicating at least one permitted linkage of the set of data.

2. Method according to claim 1, **characterised in that** the first item of assignment information is provided adaptively.

3. Method according to one of the preceding claims, **characterised in that** the indicator contains information specifying the multiplex channel (CCTrCH) and/or the physical channels.

4. Method according to one of the preceding claims, **characterised in that** a common Downlink Shared Channel "DSCH" is used as the transport channel (TrCH).

5. Method according to claim 2, **characterised in that** the indicator is transmitted via a "Dedicated Physical Control Channel" DPCH.

6. Method according to claim 2, **characterised in that** the indicator is transmitted via a common physical "Multicast Power Channel" McPCH.

7. Radio communication device having means for performing the method according to one of the preceding claims.

8. Network control unit having means for performing the method according to one of the claims 1 to 6.

## Revendications

1. Procédé de transmission d'au moins un message de groupe à au moins un groupe (MC1, MC2, MC3) d'un ou de plusieurs appareils de radiocommunication (MS1, MS2, MS3) dans au moins une zone de desserte radio d'un réseau de radiocommunication fonctionnant selon le standard UMTS, mise à disposition par une unité de contrôle réseau ou station de base, moyennant l'utilisation d'au moins un jeu de données transmis pendant au moins un intervalle de temps (TTI) par au moins un canal de transport (TrCH) et enchaîné pour constituer un canal de multiplexage (CCTrCH) réalisé en tant que CCTrCH, **caractérisé en ce que**
a) une affectation d'appareils de radiocommunication (MS1, MS2, MS3) aux groupes et au CCTrCH est opérée par l'unité de contrôle réseau,
b) une première information d'affectation est mise à la disposition de la zone de desserte radio par l'unité de contrôle réseau, la première information d'affectation incluant une affectation entre le canal de multiplexage (CCTrCH) et tous les appareils de radiocommunication (MS1, MS2, MS3, MS4) d'au moins un groupe,
c) une affectation d'un indicateur par appareil de radiocommunication est opérée, un indicateur indiquant au moins un enchaînement permis du jeu de données.

2. Procédé selon la revendication 1, **caractérisé en ce que** la mise à disposition de la première information d'affectation se fait adaptativement.

3. Procédé selon l'une des revendications précédentes, **caractérisé en ce que** l'indicateur contient le canal de multiplexage (CCTrCH) et/ou des informations spécifiant les canaux physiques.

4. Procédé selon l'une des revendications précédentes, **caractérisé en ce qu'**on utilise, en tant que canal de transport (TrCH), un canal partagé Downlink Shared Channel «DSCH».

5. Procédé selon la revendication 2, **caractérisé en ce que** l'indicateur est transmis sur un canal physique dédié «Dedicated Physical Control Channel» DPCH.

6. Procédé selon la revendication 2, **caractérisé en ce que** l'indicateur est transmis sur un canal physique commun «Multicast Power Channel» McPCH.

7. Appareil de radiocommunication comprenant des moyens permettant la mise en oeuvre du procédé selon l'une des revendications précédentes.

8. Unité de contrôle réseau comprenant des moyens permettant la mise en oeuvre du procédé selon l'une des revendications 1 à 6.
